(19) Europäisches Patentamt
European Patent Office
Office européen des brevets

(11) EP 1 422 249 A1

(12) EUROPEAN PATENT APPLICATION

(43) Date of publication:
**26.05.2004 Bulletin 2004/22**

(51) Int Cl.[7]: **C08F 10/00**, C08F 4/642, C07F 17/00

(21) Application number: **02079921.9**

(22) Date of filing: **20.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **ATOFINA Research**
**7181 Seneffe (Feluy) (BE)**

(72) Inventor: **Razavi, Abbas**
**7000 Mons (BE)**

# (54) New metallocene catalyst system

(57) Provided is a catalyst component for producing a polyolefin, which catalyst component comprises a metallocene catalyst having a structure according to a formulae (I):

$$Cp^1Cp^2R''MQ_p \quad (I)$$

wherein $Cp^1$ and $Cp^2$ are each independently a cyclopentadienyl derivative which may be substituted or unsubstituted, provided that at least one of the cyclopentadienyl derivatives comprises an N atom or a P atom in the cyclopentadienyl ring; R" is a structural bridge to impart stereorigidity between $Cp^1$ and $Cp^2$, and when only one of $Cp^1$ and $Cp^2$ comprises a P atom in the cyclopentadienyl ring, R" is attached to that phosphorous atom, or is attached to a carbon atom in the cyclopentadienyl ring distal to that phosphorous atom; M is a metal from Group IIIB, IVB, VB or VIB; Q is a hydrocarbyl group having from 1-20 carbon atoms, or a halogen; and p is the valence of M minus 2.

EP 1 422 249 A1

## Description

The present invention relates to a catalyst component and catalyst system for use in preparing polyolefins, especially isotactic or syndiotactic polyolefins such as polyethylene and polypropylene, having high or low density. The invention further relates to a process for producing polyolefins using the catalyst component or catalyst system.

Metallocene catalysts have been known to be useful in the production of polyolefins for some time. The first generation of metallocene catalysts were unbridged metallocenes. These catalysts provided a new route into polyolefin resins. However, polyolefin resins produced using unbridged metallocenes were found to have poor processibility, despite having good optical properties, such as high transparency and low haze.

In order to improve the properties of the resins, bridged metallocene catalysts were developed. Such bridged metallocene catalysts are disclosed in published PCT application number WO91/03500. Typical such bridged metallocenes are $Et(IndH_4)_2ZrCl_2$ and $Et(Ind)_2ZrCl_2$ ($IndH_4$ is an unsubstituted tetrahydroindenyl (THI) group, and Ind is an unsubstituted indenyl group). Other such known bridged metallocenes comprise substituted cyclopentadienyl ligands, such as those disclosed in published patent US 4 892 851. In these metallocenes, the substitution pattern was designed with a view to controlling the stereochemistry of polypropylene produced from the catalysts.

Resins produced from this second generation of metallocene catalysts display improved mechanical properties due to their higher molecular weight. In addition, such resins have better processing properties due to the presence of long chain branches. However, the processibility of such resins is still less than is desired.

These types of metallocene compound are generally not particularly stable. This has particular disadvantages for the use of these compounds as catalysts, since it places an upper limit on the temperatures that can be employed in a polymerisation reaction. If the temperature employed is too high, then the catalyst will decompose or degrade.

More recently, catalyst systems comprising carbon-containing ligands having heteroatoms in their structure have been investigated. One such example is an organometallic compound comprising a ketimide ligand. US 6 114 481 discloses compounds in which an organometallic complex is formed from a group IV metal and a ketimide ligand. These types of compound can be used in catalyst systems to produce olefin co-polymers having both high molecular weight and very low density. Ketimide metal complexes are complexes having the general formula: $M-N=CR^1R^2$, where M is the metal atom and $R^1$ and $R^2$ are substituents.

US 6 051 667 describes metallocene catalysts comprising a phospholyl ligand. The metallocenes comprises two cyclopentadiene-type ligands (one being a phospholyl ligand) joined to each other by a metalloid-containing bridging group. The bridging group is attached to the phospholyl ligand at the carbon atom adjacent to the phosphorous atom. These catalysts are indicated to be useful in preparing polymers comprising ethylene and propylene, and in particular linear low density polyethylene (LLDPE).

It is still desirable to produce high quality polyolefins using metallocenes that are more stable than those employed in known catalyst systems. In particular it is still desirable to provide a metallocene catalyst that can withstand higher temperatures in a polymerisation reaction, to improve the polymer product and speed up process time.

It is thus an object of the present invention to overcome the problems associated with the above prior art catalysts. Accordingly, the present invention provides a catalyst component for producing a polyolefin, which catalyst component comprises a metallocene catalyst having a structure according to a formula (I):

$$Cp^1Cp^2R''MQ_p \qquad (I)$$

wherein $Cp^1$ and $Cp^2$ are each independently a cyclopentadienyl derivative which may be substituted or unsubstituted, provided that at least one of the cyclopentadienyl derivatives comprises an N atom or a P atom in the cyclopentadienyl ring; R" is a structural bridge to impart stereorigidity between $Cp^1$ and $Cp^2$, and when only one of $Cp^1$ and $Cp^2$ comprises a P atom in the cyclopentadienyl ring, R" is attached to that phosphorous atom, or is attached to a carbon atom in the cyclopentadienyl ring distal to that phosphorous atom; M is a metal from Group IIIB, IVB, VB or VIB; Q is a hydrocarbyl group having from 1-20 carbon atoms, or a halogen; and p is the valence of M minus 2.

By substituted, in the context of the present invention it is meant that any of the positions on the cyclopentadienyl derivative may comprise a substituent in place of a hydrogen atom. This may be either within the five-membered cyclopentadienyl ring, or (if the ligand is for example indenyl tetrahydroindenyl or fluorenyl) on a carbon atom in the ring system outside of the five-membered ring.

Each catalyst component comprises two cyclopentadienyl derivatives. The two ligands are preferably different. However, in some embodiments of the present invention it is also possible that the two cyclopentadienyl derivatives of the catalyst component are the same.

The present invention further provides a method for producing a polyolefin, which method comprises polymerising an olefin monomer (or an olefin monomer and a co-monomer) in the presence of a catalyst component (or

catalyst system comprising the catalyst component) as defined above.

The particular cyclopentadienyl ligands on the metallocene catalysts lead to the advantages of the present invention. The preferred structure of the ligands of the present catalysts will be discussed in more detail below.

In a preferred embodiment of the present invention, $Cp^1$ or $Cp^2$ comprises a nitrogen atom in the cyclopentadienyl ring, and R" is attached to the nitrogen atom, to a carbon atom vicinal to the nitrogen atom, or to a carbon atom non-vicinal to the nitrogen atom. In an alternative embodiment, $Cp^1$ or $Cp^2$ comprises a phosphorus atom in the cyclopentadienyl ring, and R" is attached to the phosphorus atom, or to a carbon atom non-vicinal to the phosphorus atom.

In the present invention, the type of cyclopentadienyl derivative is not especially limited, provided that the derivative comprises at least one five-membered cyclopentadienyl-type ring. Thus, in preferred embodiments of the present invention $Cp^1$ and $Cp^2$ may be independently selected from cyclopentadienyl-type groups, indenyl-type groups and fluorenyl-type groups. Unlike cyclopentadienyl *derivative,* by cyclopentadienyl-type *group* is meant a single substituted or unsubstituted cyclopentadienyl ring system, and not a fused ring system such as indenyl or fluorenyl systems. In a particularly preferred embodiment of the present invention, $Cp^1$ comprises a cyclopentadienyl-type group (e.g. pyrrole and phosphole derivatives) and $Cp^2$ comprises a fluorenyl-type group. In an alternative preferred embodiment both $Cp^1$ and $Cp^2$ comprise indenyl-type groups, or $Cp^1$ comprises an indenyl-type group (e.g. imidazolyl) and $Cp^2$ comprises a fluorenyl-type group.

Typically, the catalyst components of the present invention have a formula selected from the following formulae (II)-(VI):

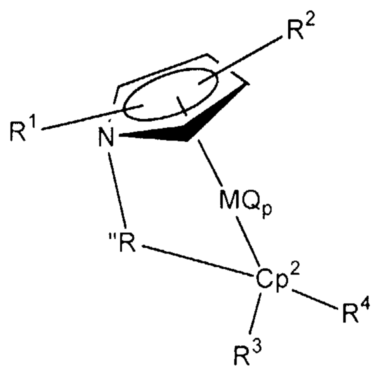

(II)

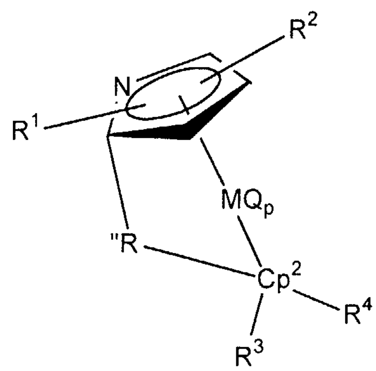

(III)

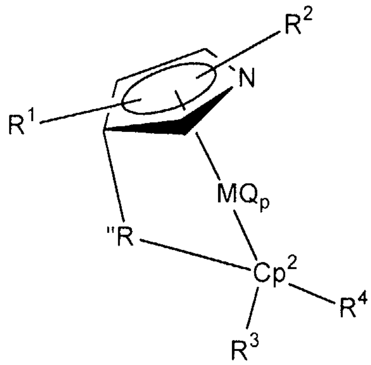

(IV)

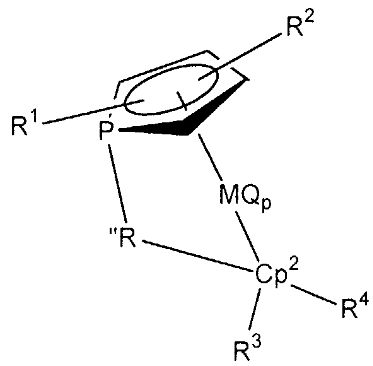

(V)

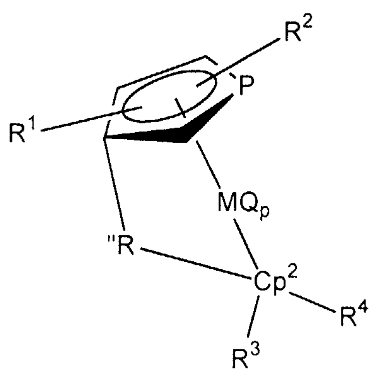

(VI)

in which $Cp^2$, R", M, Q, and p are as defined above, and $R^1$, $R^2$, $R^3$ and $R^4$ are substituents and may be the same or different.

The type of bridge present between the ligands in the present catalyst components is not itself particularly limited. Typically R" comprises an alkylidene group having 1 to 20 carbon atoms, a germanium group (e.g. a dialkyl germanium group), a silicon group (e.g. a dialkyl silicon group), a siloxane group (e.g. a dialkyl siloxane group), an alkyl phosphine group or an amine group. Preferably, the substituent comprises a hydrocarbyl radical having at least one carbon atom to form the bridge, such as a substituted or unsubstituted ethylenyl radical (e.g. Et, $-CH_2CH_2-$). Most preferably R" is Et or $Me_2Si$.

The metal, M, in the metallocene catalyst is preferably a metal from Group IIIB, IVB, VB or VIB of the periodic table. Typically, M is Ti, Zr, Hf, or V and Q is preferably a halogen, typically Cl. Typically the valence of the metal is 4, such that p is 2.

It is particularly preferred that one cyclopentadienyl derivative is a cyclopentadienyl ligand and the other is a fluorenyl ligand. Thus in preferred embodiments of the present invention, the catalyst components are selected from compounds having the following structures (VII)-(XI):

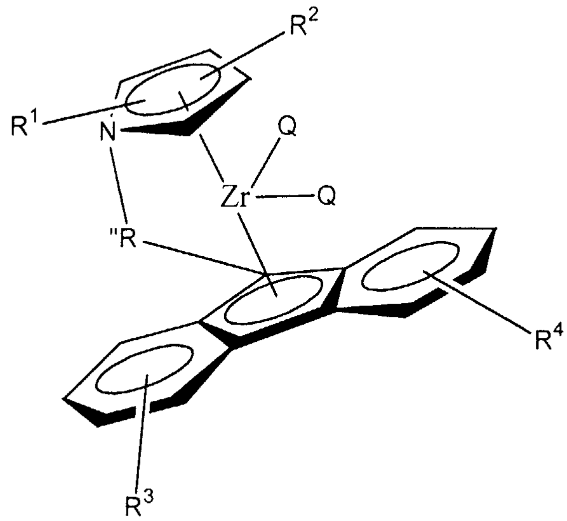

(VII)

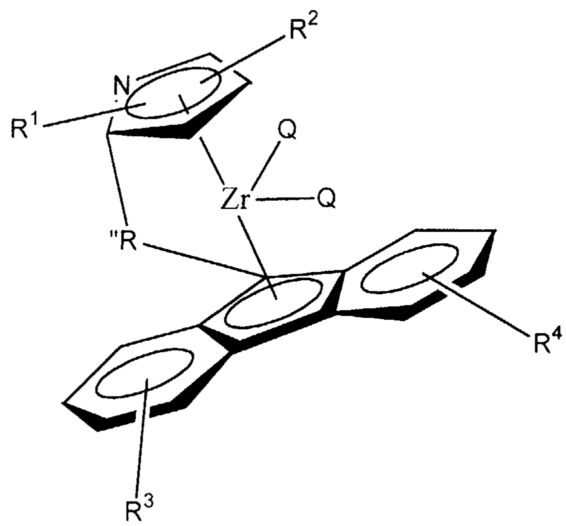

(VIII)

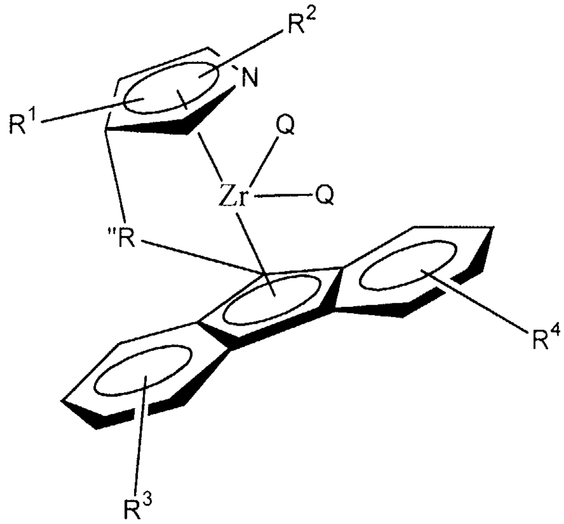

(IX)

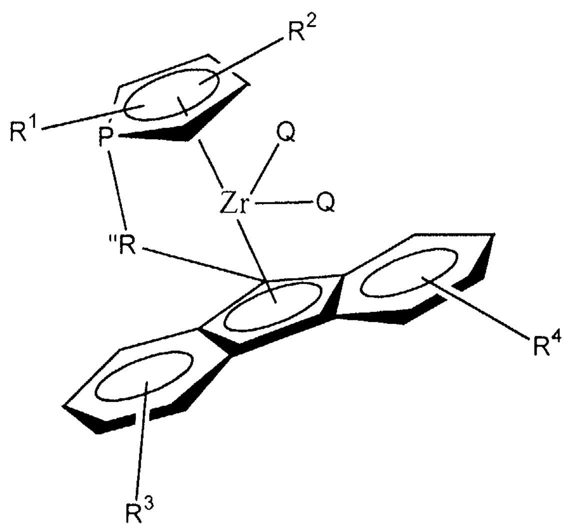

(X)

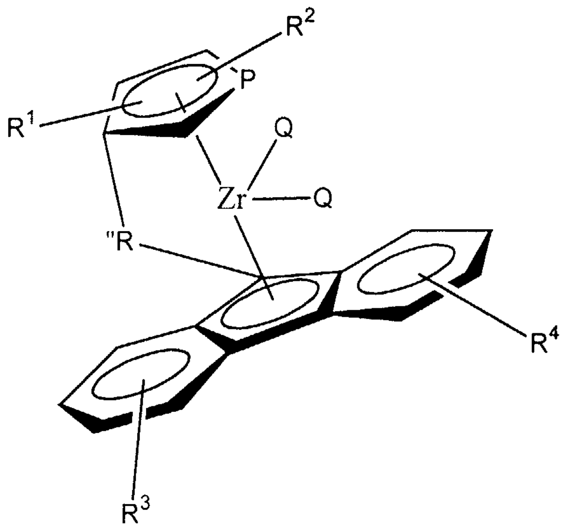

(XI)

wherein R", M, Q, p, $R^1$, $R^2$, $R^3$ and $R^4$ are as defined above.

The substituent or substituents present on the ligands in the above-described catalyst components are not particularly limited. The above ligands, when comprising more than one substituent, may be substituted with the same substituent throughout, or with different substituents. Typically the substituents are independently selected from an aryl group and a hydrocarbyl group having from 1-20 carbon atoms. The most preferred substituents are methyl groups. Other preferred substituents include phenyl (Ph), benzyl (Bz), naphthyl (Naph), indenyl (Ind) and benzindenyl (BzInd), as well as Et, n-Pr, i-Pr, n-Bu, t-Bu, silane derivatives(e.g. $Me_3Si$), alkoxy (preferably R-O, where R is $C_1$-$C_{20}$ alkyl), cycloalkyl, and halogen. As can be seen from the above formulae, preferably there are two substituents or less on both $Cp^1$ and $Cp^2$, especially when $Cp^1$ is cyclopentadienyl and/or $Cp^2$ is fluorenyl.

The position of the substituent or substituents on the ligands is not particularly limited. The ligands may thus have any substitution pattern, including being unsubstituted or fully substituted. However, when $Cp^1$ and/or $Cp^2$ is a cyclopentadienyl-type group, or an indenyl-type group, the substituents are preferably in the 2- and/or 4-positions, and when $Cp^1$ and/or $Cp^2$ is a fluorenyl type group, the substituents are preferably in the 3- and/or 6-positions or the 2- and/or 7-positions.

The use of a catalyst as defined above (in which the cyclopentadienyl derivatives comprise heteroatoms in the above specific positions) to produce a polyolefin, allows polymerisation at higher temperatures than with known catalysts, resulting in improved polymer products and improved methods for producing these products. The temperature of polymerisation is not especially limited and can be varied in accordance with the starting materials employed, the target polymers to be produced and the type of polymerisation carried out (homogeneous, heterogeneous slurry or gas phase). Preferably, polymerisation takes place at from 100-240°C, more preferably from 120-160°C. When polyethylene is produced in a solution polymerisation a temperature of from 120-150, 120-155 or 120-160°C are preferred. In a high pressure polymerisation of ethylene (around 3000 atm or more, or 300 MPa or more) temperatures of from 170-240, 180-240, 190-240 or 200-240°C are preferred.

The most preferred catalyst components of the present invention are:

$Me_2Si$(pyrrolyl)$FluZrCl_2$
Et(pyrrolyl)$FluZrCl_2$
$Me_2Si$(Imidazolyl)$FluZrCl_2$
Et(Imidazolyl)$FluZrCl_2$
$Me_2Si$(phospholyl)$FluZrCl_2$
Et(phospholyl)$FluZrCl_2$

The catalyst system of the present invention is not particularly limited provided that it comprises at least one metallocene catalyst component as defined above. Thus the system may comprise further catalysts, if necessary, such as further metallocene catalysts according to the present invention, or other catalysts.

The catalyst system of the present invention comprises, in addition to the above catalyst component, one or

more activating agents capable of activating the metallocene catalyst. Typically, the activating agent comprises an aluminium- or boron-containing activating agent.

Suitable aluminium-containing activating agents comprise an alumoxane, an alkyl aluminium compound and/or a Lewis acid.

The alumoxanes that can be used in the present invention are well known and preferably comprise oligomeric linear and/or cyclic alkyl alumoxanes represented by the formula (A):

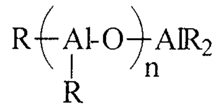

(A)

for oligomeric linear alumoxanes; and formula (B)

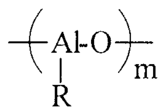

(B)

for oligomeric cyclic alumoxanes,
wherein n is 1-40, preferably 10-20; m is 3-40, preferably 3-20; and R is a $C_1$-$C_8$ alkyl group, preferably methyl. Generally, in the preparation of alumoxanes from, for example, aluminium trimethyl and water, a mixture of linear and cyclic compounds is obtained.

Suitable boron-containing activating agents may comprise a triphenylcarbenium boronate, such as tetrakis-pentafluorophenyl-borato-triphenylcarbenium as described in EP-A-0427696:

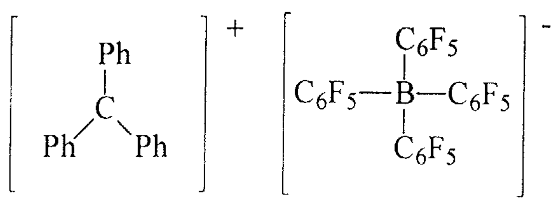

or those of the general formula below, as described in EP-A-0277004 (page 6, line 30 to page 7, line 7):

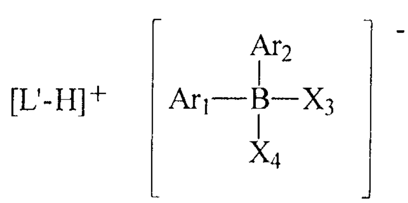

Other preferred activating agents include hydroxy isobutylaluminium and a metal aluminoxinate. These are particularly preferred when at least one Q in the general formula for metallocenes comprises an alkyl group.

The catalyst system may be employed in the gas phase or in a solution polymerisation process, which is homogeneous, or a slurry process, which is heterogeneous. In a solution process, typical solvents include hydrocarbons

having 4-7 carbon atoms such as heptane, toluene or cyclohexane. In a slurry process it is necessary to immobilise the catalyst system on an inert support, particularly a porous solid support such as talc, inorganic oxides and resinous support materials such as polyolefin. Preferably, the support material is an inorganic oxide in its finely divided form.

Suitable inorganic oxide materials which are desirably employed in accordance with this invention include group IIA, IIIA, IVA, or IVB metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalised polyolefins such as finely divided polyethylene.

Preferably, the support is a silica support having a surface area of from 100-1000 $m^2$/g, more preferably from 200-700 $m^2$/g, and a pore volume of from 0.5-4 ml/g, more preferably from 0.5-3 ml/g.

The amount of alumoxane and metallocenes usefully employed in the preparation of the solid support catalyst can vary over a wide range. Generally the aluminium to transition metal mole ratio is in the range between 1:1 and 100:1, preferably in the range 5:1 and 80:1 and more preferably in the range 5:1 and 50:1.

The order of addition of the catalyst and alumoxane to the support material can vary. In accordance with a preferred embodiment of the present invention alumoxane dissolved in a suitable inert hydrocarbon solvent is added to the support material slurried in the same or other suitable hydrocarbon liquid and thereafter the catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane, and aromatics such as benzene, toluene, ethylbenzene and diethylbenzene.

Preferably the support material is slurried in toluene and the catalyst component and alumoxane are dissolved in toluene prior to addition to the support material.

The polyolefins that the present catalyst is capable of producing are not particularly limited. It is particularly preferred that the catalyst is capable of producing polyethylene and/or polypropylene.

The catalyst component or catalyst system of the present invention are used in the method of the present invention to produce polyolefin resins. It is especially preferred that the method of the present invention is a method of producing a polyethylene or a polypropylene.

The conditions employed for polymerisation in the method of the present invention are not particularly limited, provided they are sufficient to effectively polymerise the particular monomeric olefin used as a starting material. Advantageously high polymerisation temperatures may be employed, as mentioned above, such as from 100 to 240°C. When the monomer to be polymerised in the present method is ethylene, a hydrocarbon solvent such as isobutane or hexane is preferably employed. Preferably polymerisation takes place in the presence of hydrogen and an alkene comonomer such as 1-butene or 1-hexene.

The polymerisation process in which the catalyst systems of the present invention can be used is not particularly limited. Preferably the catalysts are employed in a process for polymerising ethylene. More preferably the process is a process for producing a polyethylene with a bimodal or multimodal molecular weight distribution. Such processes may employ a dual site catalyst to achieve bimodality and one or both of the catalytic sites may be provided by metallocene catalysts as described in the present invention.

Alternatively the present catalysts may be employed in propylene polymerisation to produce isotactic, atactic and/or syndiotactic polypropylene. The catalysts are also capable of preparing polypropylene comprising both isotactic and syndiotactic blocks, as well as both atactic and isotactic blocks. Such catalysts are termed stereoblock catalysts.

The invention will now be described in further detail by way of example only, with reference to the following non-limiting specific embodiments.

## Examples

*Catalyst preparation*

*Preparation of chlorodimethylfluorenyl silane*

The following reactions were carried out:

diethylether

fluorene + methyllithium ——————> fluorenyllithium + methane

0°C

fluorenyllithium + dimethyldichlorosilane → chlorodimethylfluorenyl silane

In a round bottom flask equipped with a magnetic stirrer bar and an $N_2$ inlet was placed 53.19 g (0.32 mol.) of fluorene. Under nitrogen, 500 ml of diethylether were introduced. This solution was cooled to 0°C and 200 ml (0.32 mol.) of methyllithium were added dropwise. The reaction mixture was stirred at ambient temperature for four hours. The solvent was evaporated from the resulting yellow mixture under a vacuum leaving a yellow powder. 2 litres of n-hexane were added to the powder. The suspension of fluorenyllithium was transferred into a flask containing a solution of 80.2 ml (0.64 mol.) of dimethyldichlorosilane in 1 litre of n-hexane. The resulting green mixture was stirred for 12 hours. The resulting white product was filtered under nitrogen into a funnel containing 200 ml of Celite. The filtrate was evaporated under vacuum to give 75 g of a green powder (yield 90.6 %).

*Preparation of dimethylpyrrolefluorenyl silane*

The following reactions were carried out:

tetrahydrofuran

pyrrole + methyllithium ——————> pyrrolelithium + methane

0°C

pyrrolelithium + chlorodimethylfluorenyl silane → dimethylpyrrolefluorenyl silane

2.5 g (0.0372 mol.) of pyrrole was placed in a 1 litre flask, and 100 ml of tetrahydrofuran was added under nitrogen. The solution was cooled to 0°C. To this solution was added 23.3 ml (0.0372 mol.) of methyllithium dropwise. The reaction was allowed to proceed for 1 hour, after which time it was complete. 9.641 g (0.0372 mol.) of chlorodimethylfluorenyl silane was then added in 50 ml of tetrahydrofuran. The resulting brown mixture was stirred for 24 hours. The solvent was evaporated under a vacuum and the brown solid extracted with 1 litre of pentane. After evaporation of the pentane, an orange solid was obtained. This solid was recrystallised from pentane giving 6.2 g of an orange powder (yield 57.5 %).

*Preparation of dimethylpyrrolefluorenylsilyl zirconium dichloride*

The following reactions were carried out:

diethylether

dimethylfluorenylpyrrole silane + 2 methyllithium ———>

0°C

dimethyl(pyrrolelithium)(fluorenyllithium) silane + 2 methane

dimethyl(pyrrolelithium)(fluorenyllithium) silane + $ZrCl_4$ →

dimethylpyrrolefluorenylsilyl zirconium dichloride

3 g (10.36 mmol.) of dimethylpyrrolefluorenyl silane was dissolved in 100 ml of dry diethylether under nitrogen, and the solution was cooled to 0°C. A solution of 13 ml (20.27 mmol.) of methyllithium was added to this solution dropwise. After 24 hours, the solvent was removed under vacuum, and the resulting brown powder washed with 50 ml of pentane. The brown dianion ligand and 100 ml of pentane were placed in a 250 ml flask under nitrogen, and 2.4152 g (10.36 mmol.) of zirconium tetrachloride was added to this suspension. The reaction mixture became orange/brown and was stirred overnight in a glove box. After filtration, the solvent was removed under vacuum at 40°C, and the resulting solid was washed with 3 x 100 ml of pentane. The metallocene was extracted with methylene chloride. After extraction, the solvent was evaporated to give 1.93 g of a brown powder (yield 41.42 %).

To produce activated catalyst, catalyst was reacted with methylalumoxane (30 wt.% in toluene), at a temperature of 25°C for 10 minutes to give a solution of the corresponding metallocene cation and the anionic methylalumoxane oligomer.

Then the resulting solution comprising the metallocene cation and the anionic methylalumoxane oligomer was added to a support under a nitrogen atmosphere via a dropping funnel, which was immediately replaced with a reflux condenser. The mixture was heated to 110°C for 90 minutes. The reaction mixture was then cooled to room temperature, filtered under nitrogen and washed with toluene. The support used was silica having a total pore volume of 4.22 ml/g and a surface area of 322 $m^2$/g. This silica was initially further prepared by drying under a high vacuum on a schlenk line for three hours to remove physically absorbed water.

The catalyst system obtained was then washed with pentane and dried under a mild vacuum.

Catalyst systems of the present invention comprising two different catalyst components (dimethylpyrrolylfluorenylsilyl zirconium dichloride and dimethylimidazolylfluorenylsilyl zirconium dichloride) were used to polymerise ethylene and propylene. In each polymerisation reaction, ethylene was polymerised in a bench reactor at 80°C, and propylene was polymerised in a bench reactor at 60°C. In the ethylene polymerisation, an isobutane solvent was used comprising 6 % wt. ethylene, and 0.6 wt.% of 1-hexene was added as co-monomer. The ethylene polymerisations were carried out in the presence of 0.25 N1 of hydrogen.

*Example 1: polymerisation of ethylene using dimethylpyrrolefluorenylsilyl zirconium dichloride catalyst*

10 g of ethylene were polymerised using a system comprising 15 mg of catalyst and 850 ppm of MAO at 170°C. A polyethylene product was produced in good yield having a melting point of 124.5°C.

*Example 2: polymerisation of propylene using dimethylpyrrolefluorenylsilyl zirconium dichloride catalyst*

4.7 g of propylene were polymerised using a system comprising 20 mg of catalyst and 850 ppm of MAO at 170°C. A polypropylene product was produced in good yield. The product was an atactic polypropylene having only 10 % or less of 2,1 conversion defects.

*Example 3: polymerisation of ethylene using dimethylimidazolylfluorenylsilyl zirconium dichloride catalyst*

3 g of ethylene were polymerised using a system comprising 15 mg of catalyst and 850 ppm of MAO at 170°C. A polyethylene product was produced in good yield having a melting point of 129.5°C.

*Example 4: polymerisation of propylene using dimethylimidazolylfluorenylsilyl zirconium dichloride catalyst*

3.8 g of propylene were polymerised using a system comprising 20 mg of catalyst and 850 ppm of MAO at 170°C. A polypropylene product was produced in good yield. The product was an atactic polypropylene.

## Claims

**1.** A catalyst component for producing a polyolefin, which catalyst component comprises a metallocene catalyst having a structure according to a formulae (I):

$$Cp^1Cp^2R''MQ_p \quad (I)$$

wherein $Cp^1$ and $Cp^2$ are each independently a cyclopentadienyl derivative which may be substituted or unsubstituted, provided that at least one of the cyclopentadienyl derivatives comprises an N atom or a P atom in the cyclopentadienyl ring; R" is a structural bridge to impart stereorigidity between $Cp^1$ and $Cp^2$, and when only one of $Cp^1$ and $Cp^2$ comprises a P atom in the cyclopentadienyl ring, R" is attached to that phosphorous atom, or is attached to a carbon atom in the cyclopentadienyl ring distal to that phosphorous atom; M is a metal from Group IIIB, IVB, VB or VIB; Q is a hydrocarbyl group having from 1-20 carbon atoms, or a halogen; and p is the valence of M minus 2.

**2.** A catalyst component according to claim 1, in which $Cp^1$ or $Cp^2$ comprises a nitrogen atom in the cyclopentadienyl ring, and R" is attached to the nitrogen atom, to a carbon atom vicinal to the nitrogen atom, or to a carbon atom non-vicinal to the nitrogen atom.

**3.** A catalyst component according to claim 1 or claim 2, which component comprises a metallocene catalyst of formula (I) in which $Cp^1$ and $Cp^2$ are independently selected from cyclopentadienyl groups, indenyl groups and fluorenyl groups.

**4.** A catalyst component according to any preceding claim, which component has a formula selected from the following formulae (II)-(VI):

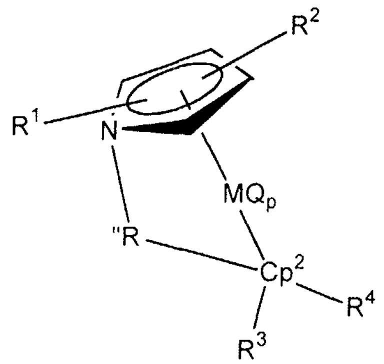

(II)

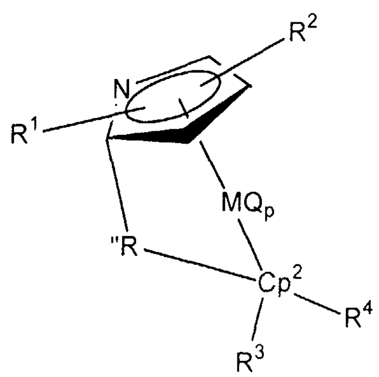

(III)

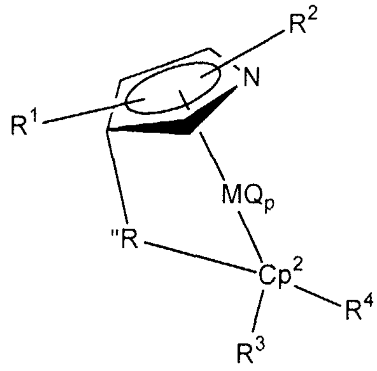

(IV)

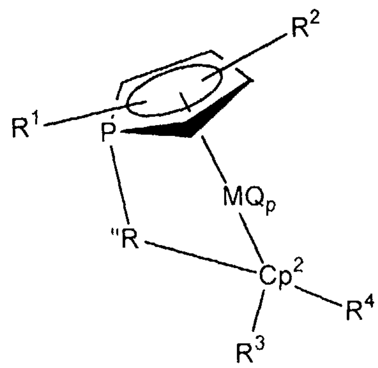

(V)

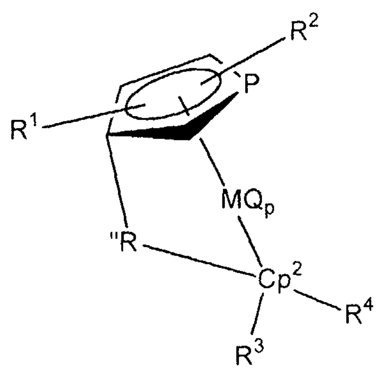

(VI)

wherein $R^1$, $R^2$, $R^3$ and $R^4$ are substituents and may be the same or different.

**5.** A catalyst component according to any preceding claim, wherein $Cp^1$ comprises a cyclopentadienyl group and $Cp^2$ comprises a fluorenyl group.

**6.** A catalyst component according to claim 3, wherein both $Cp^1$ and $Cp^2$ comprise indenyl groups.

**7.** A catalyst component according to any preceding claim, wherein M is Ti, Zr, Hf, or V.

**8.** A catalyst component according to any preceding claim, wherein p is 2.

**9.** A catalyst component according to any preceding claim, wherein Q is Cl.

**10.** A catalyst component according to any preceding claim, wherein R" is substituted or unsubstituted and comprises a group selected from an alkylene derivative having from 1-20 carbon atoms, a dialkyl germanium derivative, a dialkyl silicon derivative, a dialkyl siloxane derivative, an alkyl phosphine derivative or an amine derivative.

**11.** A catalyst component according to claim 10, wherein R" comprises an $Me_2Si$ derivative or an Et derivative.

**12.** A catalyst component according to any preceding claim, wherein the substituents on the $Cp^1$ and/or $Cp^2$ derivatives are independently selected from aryl derivatives having from 1-20 carbon atoms, hydrocarbyl derivatives having from 1-20 carbon atoms, cycloalkyl derivatives, silane derivatives, alkoxy derivatives and halogens.

**13.** A catalyst component according to claim 12, wherein the substituents on the $Cp^1$ and/or $Cp^2$ derivatives are independently selected from Ph, Bz, Naph, Ind, BzInd, Me, Et, n-Pr, i-Pr, n-Bu, t-Bu, and $Me_3Si$.

**14.** A catalyst component according to claim 13, wherein the substituents comprise methyl groups.

**15.** A catalyst component according to any preceding claim, wherein the metallocene catalyst is immobilised on a solid support.

**16.** A catalyst system comprising a catalyst component as defined in any preceding claim, and further comprising an aluminium- or boron-containing activating agent capable of activating the catalyst component.

**17.** A method for producing a polyolefin, which method comprises polymerising an olefin monomer in the presence of a catalyst component or catalyst system as defined in any of claims 1-16.

**18.** A method according to claim 17, wherein the olefin monomer is ethylene or propylene.

**19.** A polyolefin, obtainable according to a method as defined in claim 17 or claim 18.

**20.** Use of a catalyst component or catalyst system as defined in any of claims 1-16 for the preparation of a polyolefin.

**21.** Use according to claim 20 for the preparation of a polyethylene or a polypropylene.

European Patent Office

# EUROPEAN SEARCH REPORT

Application Number
EP 02 07 9921

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.7) |
|---|---|---|---|
| X | WO 98 01487 A (KELLY WARREN MARK ;BAYER AG (DE); STUMPF ANDREAS (DE); OSTOJA STAR) 15 January 1998 (1998-01-15) * examples 43,46,49 * ----- | 1-4,7-9, 12-14, 16-21 | C08F10/00 C08F4/642 C07F17/00 |
| X | EP 0 741 145 A (SUMITOMO CHEMICAL CO) 6 November 1996 (1996-11-06) * examples 10,11 * ----- | 1-4, 6-11, 16-21 | |

TECHNICAL FIELDS SEARCHED (Int.Cl.7)
C08F
C07F

~~The present search report has been drawn up for all claims~~

| Place of search | Date of completion of the search | Examiner |
|---|---|---|
| The Hague | 16 April 2003 | Parry, J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number
EP 02 07 9921

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1 - 21 (in part)

European Patent Office

**LACK OF UNITY OF INVENTION SHEET B**

Application Number
EP 02 07 9921

The Search Division considers that the present European patent application does not comply with the requirements of unity of invention and relates to several inventions or groups of inventions, namely:

1. claims: 1-21 (in part)

   the subject matter of claims 1-21 (in part) insofar as it relates to compounds having one nitrogen atom in one cyclopentadienyl ring only.

   ---

2. claims: 1-21 (in part)

   the subject matter of claims 1-21 (in part) insofar as it relates to compounds having more than one nitrogen atom in at least one of the cyclopentadienyl rings.

   ---

3. claims: 1-21 (in part)

   the subject matter of claims 1-21 (in part) insofar as it relates to compounds having two nitrogen atoms, one in each of the cyclopentadienyl rings only.

   ---

4. claims: 1-21 (in part)

   the subject matter of claims 1-21 (in part) insofar as it relates to compounds having one phosphorous atom in one cyclopentadienyl ring only.

   ---

5. claims: 1-21 (in part)

   the subject matter of claims 1-21 (in part) insofar as it relates to compounds having more than one phosphorous atom in at least one of the cyclopentadienyl rings.

   ---

6. claims: 1-21 (in part)

   the subject matter of claims 1-21 (in part) insofar as it relates to compounds having two phosphorous atoms, one in each of the cyclopentadienyl rings only.

   ---

## ANNEX TO THE EUROPEAN SEARCH REPORT ON EUROPEAN PATENT APPLICATION NO. EP 02 07 9921

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2003

| Patent document cited in search report | Publication date | Patent family member(s) | Publication date |
|---|---|---|---|
| WO 9801487 A | 15-01-1998 | DE 19627064 A1 | 08-01-1998 |
| | | DE 19714058 A1 | 08-10-1998 |
| | | AT 192755 T | 15-05-2000 |
| | | AT 192756 T | 15-05-2000 |
| | | AT 190632 T | 15-04-2000 |
| | | AT 189465 T | 15-02-2000 |
| | | AT 215956 T | 15-04-2002 |
| | | AT 196771 T | 15-10-2000 |
| | | AU 3345697 A | 02-02-1998 |
| | | AU 3441497 A | 02-02-1998 |
| | | AU 3441597 A | 02-02-1998 |
| | | AU 3441697 A | 02-02-1998 |
| | | AU 3441797 A | 02-02-1998 |
| | | AU 3692797 A | 02-02-1998 |
| | | CA 2259399 A1 | 15-01-1998 |
| | | CA 2259422 A1 | 15-01-1998 |
| | | CA 2259434 A1 | 15-01-1998 |
| | | CA 2259435 A1 | 15-01-1998 |
| | | CA 2259438 A1 | 15-01-1998 |
| | | CA 2259553 A1 | 15-01-1998 |
| | | CN 1228790 A ,B | 15-09-1999 |
| | | CN 1229415 A ,B | 22-09-1999 |
| | | CN 1229416 A ,B | 22-09-1999 |
| | | CN 1229417 A | 22-09-1999 |
| | | CN 1229418 A ,B | 22-09-1999 |
| | | CN 1229410 A ,B | 22-09-1999 |
| | | DE 59701094 D1 | 09-03-2000 |
| | | DE 59701269 D1 | 20-04-2000 |
| | | DE 59701656 D1 | 15-06-2000 |
| | | DE 59701657 D1 | 15-06-2000 |
| | | DE 59702429 D1 | 09-11-2000 |
| | | DE 59706978 D1 | 16-05-2002 |
| | | WO 9801483 A1 | 15-01-1998 |
| | | WO 9801484 A1 | 15-01-1998 |
| | | WO 9801485 A1 | 15-01-1998 |
| | | WO 9801486 A1 | 15-01-1998 |
| | | WO 9801455 A1 | 15-01-1998 |
| | | WO 9801487 A1 | 15-01-1998 |
| | | EP 0909281 A1 | 21-04-1999 |
| | | EP 0909282 A1 | 21-04-1999 |
| | | EP 0909283 A1 | 21-04-1999 |
| | | EP 0909284 A1 | 21-04-1999 |
| | | EP 0912585 A1 | 06-05-1999 |
| | | EP 0909285 A1 | 21-04-1999 |
| | | ES 2146103 T3 | 16-07-2000 |
| | | ES 2146106 T3 | 16-07-2000 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 07 9921

This annex lists the patent family members relating to the patent documents cited in the above-mentioned European search report. The members are as contained in the European Patent Office EDP file on
The European Patent Office is in no way liable for these particulars which are merely given for the purpose of information.

16-04-2003

| Patent document cited in search report | Publication date | Patent family member(s) | Publication date |
|---|---|---|---|
| WO 9801487 A | | ES 2144871 T3 | 16-06-2000 |
| | | ES 2143316 T3 | 01-05-2000 |
| | | ES 2175428 T3 | 16-11-2002 |
| | | ES 2151740 T3 | 01-01-2001 |
| EP 0741145 A | 06-11-1996 | CN 1145370 A | 19-03-1997 |
| | | DE 69605845 D1 | 03-02-2000 |
| | | DE 69605845 T2 | 18-05-2000 |
| | | EP 0741145 A1 | 06-11-1996 |
| | | JP 9020802 A | 21-01-1997 |

EPO FORM P0459

For more details about this annex : see Official Journal of the European Patent Office, No. 12/82